# EUROPÄISCHE PATENTSCHRIFT

(11) **EP 1 330 613 B1**
(45) Veröffentlichungstag und Bekanntmachung des Hinweises auf die Patenterteilung: **07.05.2008**
(21) Anmeldenummer: 01990386.3
(22) Anmeldetag: 02.11.2001
(51) Int. Cl.: F16D 3/76

(54) **KUPPLUNG**
COUPLING
ACCOUPLEMENT

(30) Priorität: 03.11.2000 DE 20018823 U
(43) Veröffentlichungstag der Anmeldung: 30.07.2003
(73) Patentinhaber: Hackforth GmbH, 44653 Herne (DE)
(72) Erfinder: MEHLAN, Andreas, 59425 Unna (DE); WALTER, Jürgen, 45721 Haltern (DE)
(74) Vertreter: Schneiders, Josef
(86) Internationale Anmeldenummer: PCT/EP2001/012738
(87) Internationale Veröffentlichungsnummer: WO 2002/044577

(56) Entgegenhaltungen:
- EP-A- 0 740 077
- DE-A- 2 834 490
- DE-A- 19 619 434
- GB-A- 897 771
- GB-A- 2 101 709
- US-A- 1 906 057

## Beschreibung

Die Erfindung betrifft eine rotationssymmetrische Kupplung mit einer ringförmigen Nabe, die aus einem im wesentlichen starren Werkstoff besteht und von einem Außenring aus gummielastischem Werkstoff umgeben ist, sowie mit einer am Außendurchmesser angeordneten Außenkonturierung, über welche formschlüssig Drehmomente übertragen werden, wobei in dem Außenring nahe der Außenkonturierung ein im wesentlichen ringförmiger, starrer Festkörper in den gummielastischen Werkstoff des Außenringes eingebettet ist, welcher ebenfalls eine Außenkonturierung aufweist, wobei einzelne Ausformungen der Außenkonturierung des ringförmigen, starren Festkörpers in einzelne Ausformungen der Außenkonturierung des Außenringes radial von innen nach außen hineinragen und der ringförmige, starre Festkörper in seiner radial nach außen weisenden Form der Außenkonturierung des Außenrings ähnlich ist und über den Umfang einen nahezu konstanten Abstand zur Außenkonturierung des Außenrings aufweist.

Bei einer nach dem Stande der Technik (GB 2 101 709 A, Figuren 1 bis 4) bekannten Kupplung besteht der eingebettete Festkörper aus einem starren, metallischen Ring, auf den jeweils dort, wo der Außenring aus gummielastischem Material einen radialen Vorsprung hat, ebenfalls ein radialer Vorsprung aufgeschweißt ist. Dabei ist die den metallischen Ring überdeckende Schicht aus gummielastischem Material jeweils im Bereich der Vorsprünge und jeweils in der Mitte zwischen zwei Vorsprüngen sehr dünn und im übrigen sehr dick. Das hat zur Folge, daß die elastischen Eigenschaften an den jeweiligen Lasteinleitpunkten am Umfang des Außenringes sehr ungleichmäßig sind, was zu einem unruhigen Lauf der Kupplung und zu einer Beschädigung der Außenkonturierung führen kann. Solche Beschädigungen sind insbesondere dann kritisch, wenn es aufgrund dieser Beschädigungen zu einem direkten Kontakt zwischen dem eingebetteten Festkörper und nachgeschalteten Maschinenelementen oder mit aggressiven Medien kommt.

Aus der GB 2 101 709 A Figuren 5 und 6 ist eine Kupplung der eingangs genannten Art bekannt, bei der zwei ringförmige, starre Festkörper parallel nebeneinander in den gummielastischen Werkstoff des Außenrings eingebettet sind. Diese starren Festkörper sind verhältnismäßig schmal und stützen dementsprechend mit ihren radial nach außen weisenden Ausformungen die einzelnen Ausformungen des Außenrings in entsprechend schmalen Abstützbereichen ab, so daß auch hier örtliche Überbelastungen und Beschädigungen des elastischen Außenrings zu befürchten sind, die zu einem unruhigen Lauf der Kupplung führen.

Weiterhin ist aus der DE 196 19 434 A1 eine Wellenkupplung mit einer äußeren und einer dazu koaxialen inneren Hülse bekannt, wobei der Spalt zwischen beiden Hülsen durch ein Elastomer gefüllt ist. Dabei hat die starre Außenhülse eine Außenkonturierung, über welche formschlüssig Drehmomente übertragen werden können.

Schließlich ist aus der US 1 906 057 eine elastische Kupplung zur Übertragung von Drehmomenten bekannt, mit einer im Querschnitt dreieckigen Außenhülse, in welcher ein im Querschnitt ebenfalls dreieckiger Innenkörper angeordnet ist, wobei der Spalt zwischen der Außenhülse und dem Innenkörper durch eine gummielastische Masse gefüllt ist.

Es ist Aufgabe der Erfindung, die Kupplung der eingangs genannten Art daringehend weiterzubilden, daß sie ruhiger läuft und besser gegen Beschädigungen geschützt ist.

Zur Lösung dieser Aufgabe sieht die Erfindung ausgehend von einer Kupplung der eingangs genannten Art vor, daß der gummielastische Werkstoff Silikon ist und daß der ringförmige, starre Festkörper aus gebogenem, metallischem Bandmaterial konstanter Dicke besteht und mit halbkreisförmigen Einformungen versehen ist.

Durch die Verwendung von Silikonmaterial am Außenumfang verringert sich die Wahrscheinlichkeit der Beschädigung des Außenrings durch chemisch aggressive Medien. Die besondere Ausgestaltung des ringförmigen Festkörpers aus gebogenem, metallischen Bandmaterial mit halbkreisförmigen Einformungen macht es möglich, durch die Wahl der Stärke des Bandmaterials die Steifigkeit des verstärkenden Festkörpers den Erfordernissen anzupassen. Auf diese Weise wird eine optimale Dimensionierung des starren, ringförmigen Festkörpers unter Berücksichtigung erträglicher Steifigkeitssprünge möglich.

Weiterhin ist vorgesehen, daß der ringförmige, starre Festkörper aus Aluminium oder einer Aluminiumlegierung besteht. Aluminium-Bandmaterial läßt sich besonders einfach zu dem erfingdungsgemäß verwendeten starren Ring verarbeiten, hat ein niedriges spezifisches Gewicht und verbindet sich hervorragend mit dem angrenzenden Silikonwerkstoff.

Schließlich ist vorgesehen, daß der starre Festkörper vollständig von einer Schicht Silikonwerkstoff umgeben ist. Durch eine vollständige Einbettung des starren Festkörpers wird ein besonders guter Halt des Festkörpers sichergestellt. Außerdem ist der starre metallische Festkörper ringsum gut gegen den Zutritt von aggressiven Medien geschützt.

Im folgenden wird die Erfindung anhand eines speziellen Ausführungsbeispieles unter Bezugnahme auf verschiedene Zeichnungen näher erläutert.

Es zeigen:
- Fig. 1:: Eine Seitenansicht einer erfindungsgemäßen Kupplung,

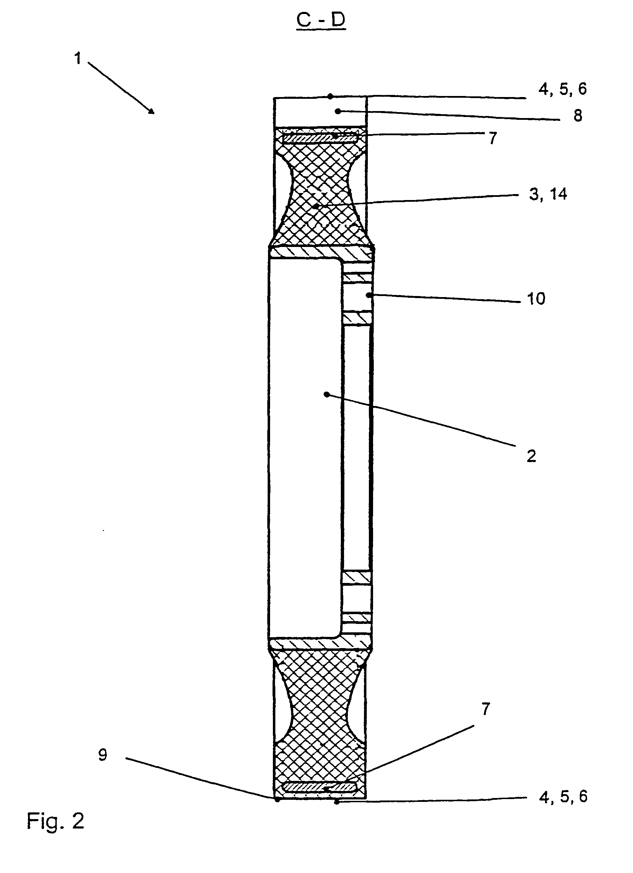

- Fig. 2:: einen Schnitt durch eine erfindungsgemäße Kupplung gemäß dem Schnitt C-D aus Figur 1,

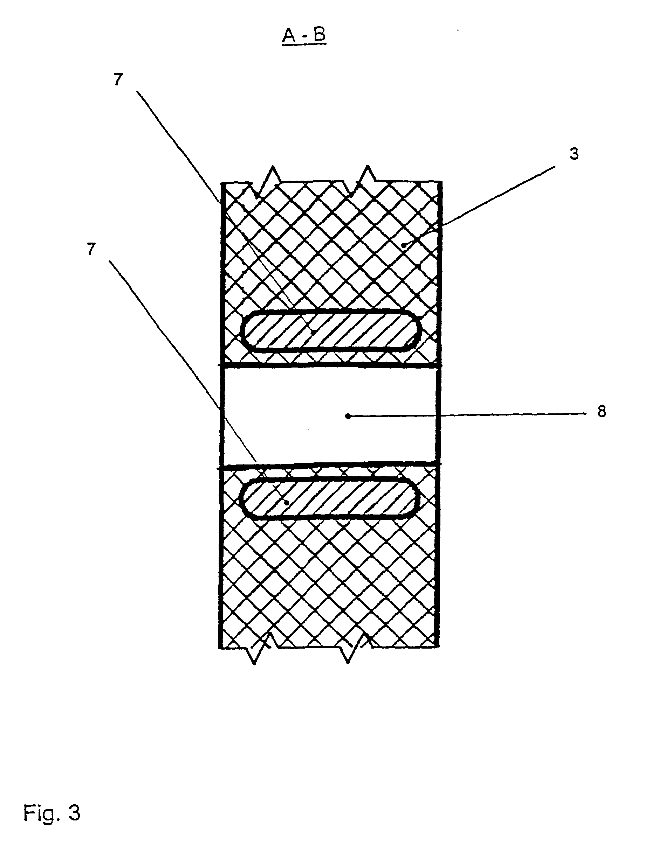

- Fig. 3:: einen Schnitt durch eine erfindungsgemäße Kupplung gemäß dem in der Figur 1 dargestellten Schnitt A-B,

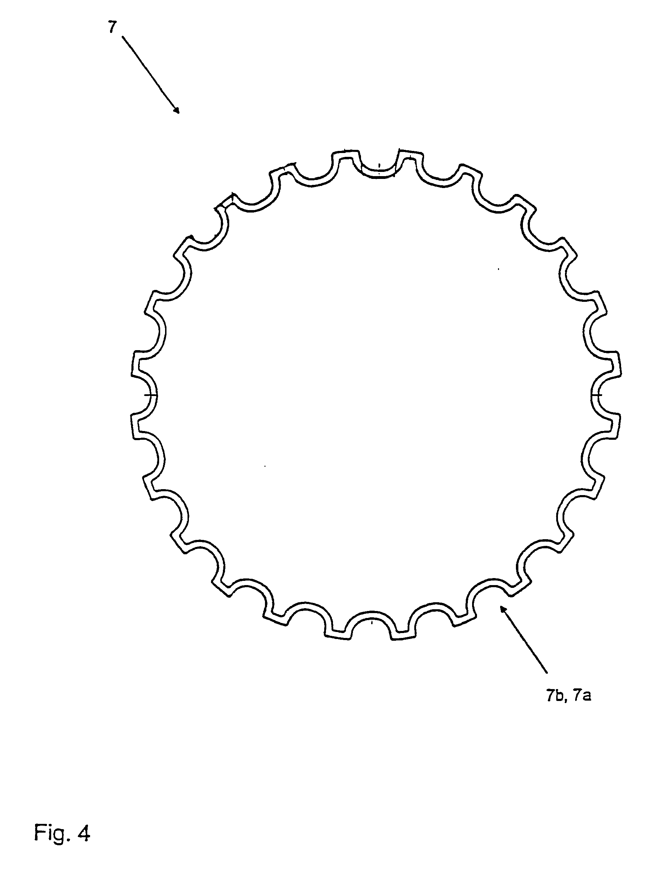

- Fig. 4:: einen erfindungsgemäßen ringförmigen, starren Festkörper,

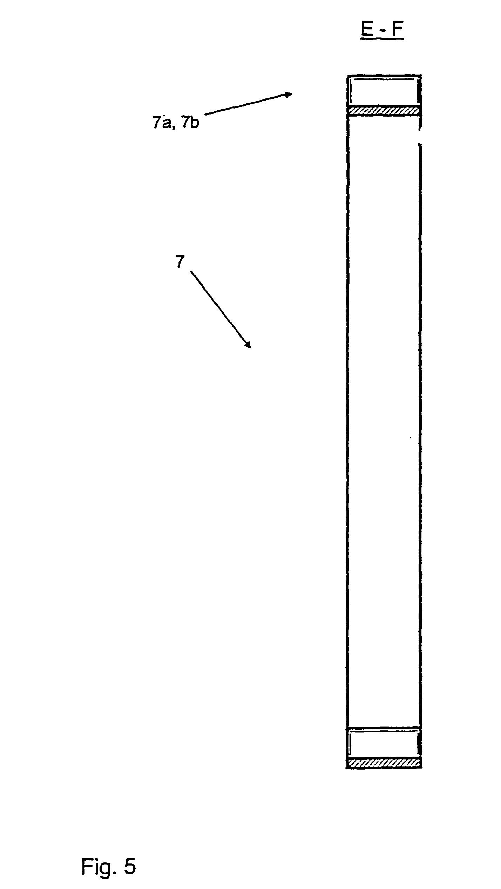

- Fig. 5:: einen Schnitt durch den erfindungsgemäßen starren Festkörper der Figur 4 gemäß dem in der Figur 4 dargestellten Schnitt E-F.

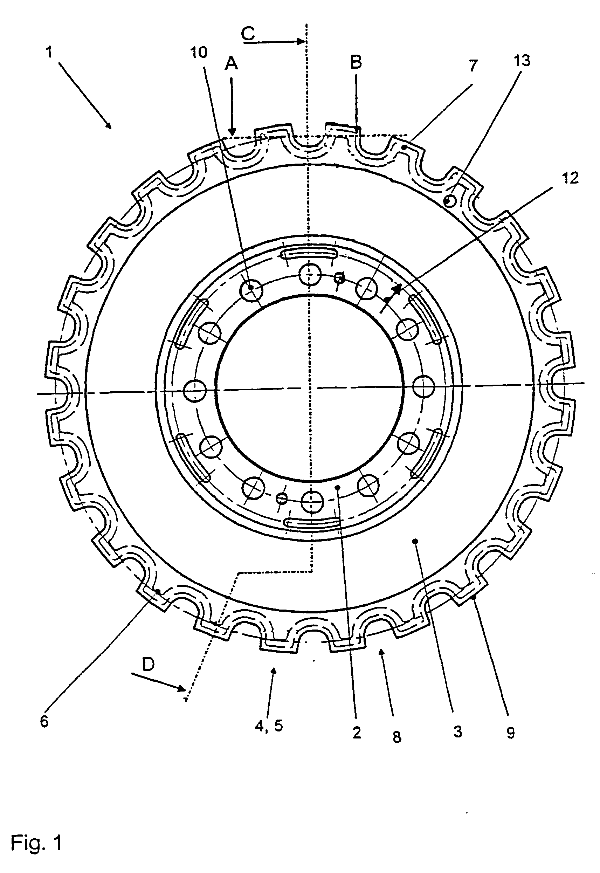

Die Figur 1 zeigt eine erfindungsgemäße Kupplung 1 mit einer metallischen Nabe 2 und einem radial außen an dieser Nabe anschließenden elastischen Außenring 3 aus Silikon. Der Außenring 3 besitzt auf seinem Außendurchmesser 4 eine Außenkonturierung 5, über welche er das über die Nabe 2 eingeleitete Drehmoment an nachfolgende Maschinenelemente überträgt.

Zur Unterstützung der einzelnen Ausformungen 6 der Außenkonturierung 5 des Außenrings 3 ist in den Silikonwerkstoff des Außenrings 3 ein ringförmiger, starrer Festkörper 7 aus Aluminiumband gleichmäßiger Dicke eingebettet. Der ringförmige starre Festkörper 7 weist, wie die Außenkonturierung 5 des Außenrings 3 halbkreisförmige Ausnehmungen 8, bzw. Einformungen auf. Der ringförmige, starre Festkörper 7 ist vollständig von dem Silikonwerkstoff umgeben, so daß sich radial nach außen eine gleichmäßig dicke Schicht 9 Silikonwerkstoff um den ringförmigen, starren Festkörper 7 ergibt.

Die Krafteinleitung von der nicht dargestellten Welle auf die Nabe 2 erfolgt über Axialbohrungen 10. Zentrierbohrungen gewährleisten eine definierte Lage der Kupplung 1 zu der nicht dargestellten Welle. Auf der Nabe 2 und auf dem Außenring 3 sind jeweils eine Markierung 12 und 13 vorgesehen, welche eine plastische Verformung des Außenrings 3 durch einen Umfangsversatz der Markierungen 12, 13 erkennen lassen.

Entsprechend der mit zunehmendem Radius abnehmenden spezifischen Belastung des Außenrings 3 verjüngt sich der Querschnitt 14 des Außenrings 3 mit zunehmendem Durchmesser. Zur Aufnahme des ringförmigen, starren Festkörpers 7 weitet sich der Querschnitt 14 derart wieder auf, daß der ringförmige, starre Festkörper 7 vollständig vom Silikonwerkstoff des Außenrings umgeben ist.

## Patentansprüche

1. Rotationssymmetrische Kupplung (1) mit einer ringförmigen Nabe (2), die aus einem im wesentlichen starren Werkstoff besteht und von einem Außenring (3) aus gummielastischem Werkstoff umgeben ist, sowie mit einer am Außendurchmesser (4) angeordneten Außenkonturierung (5), über welche formschlüssig Drehmomente übertragen werden, wobei in dem Außenring (3) nahe der Außenkonturierung (5) ein im wesentlichen ringförmiger, starrer Festkörper (7) in den gummielastischen Werkstoff des Außenringes (3) eingebettet ist, welcher ebenfalls eine Außenkonturierung (7a) aufweist, wobei einzelne Ausformungen (7b) der Außenkonturierung (7a) des ringförmigen, starren Festkörpers (7) in einzelne Ausformungen der Außenkonturierung (5) des Außenringes (3) radial von innen nach außen hineinragen, und der ringförmige, starre Festkörper (7) in seiner radial nach außen weisenden Form der Außenkonturierung (5) des Außenrings (3) ähnlich ist und über den Umfang einen nahezu konstanten Abstand zur Außenkonturierung (5) des Außenringes (3) aufweist,
**dadurch gekennzeichnet,**
**daß** der gummielastische Werkstoff Silikon ist und daß der ringförmige, starre Festkörper (7) aus gebogenem, metallischem Bandmaterial konstanter Dicke besteht und mit halbkreisförmigen Einformungen versehen ist.

2. Kupplung nach Anspruch 1, **dadurch gekennzeichnet, daß** der ringförmige, starre Festkörper (7) aus Aluminium oder einer Aluminiumlegierung besteht.

3. Kupplung nach Anspruch 1, **dadurch gekennzeichnet, daß** der ringförmige, starre Festkörper (7) vollständig von einer Schicht aus Silikonwerkstoff umgeben ist.

## Claims

1. A rotationally symmetrical coupling (1) having an annular hub (2) which consists of a substantially rigid material and which is surrounded by an outer ring (3) of rubber-elastic material, and further having, arranged at the outer diameter (4), an outer contouring (5) across which positive torque is transmitted, wherein embedded in the rubber-elastic material of the outer ring (3), in the outer ring (3), close to the outer contouring (5), is a substantially annular, rigid solid body (7) which likewise has an outer contouring (7a), wherein individual regions (7b) moulded from out of the outer contouring (7a) of the annular, rigid solid body (7) project radially from the inside outwardly into individual regions moulded from out of the outer contouring (5) of the outer ring (3), and the annular, rigid solid body (7) in its radially outwardly pointing form is similar to the outer contouring (5) of the outer ring (3), and over the periphery is of a virtually constant distance away from the outer contouring (5) of the outer ring (3),
**characterised in that**
the rubber-elastic material is silicone, and the annular, rigid solid body (7) consists of a bent, metal strip material of constant thickness, and is provided with semi-circular niches.

2. A coupling according to Claim 1, **characterised in that** the annular rigid solid body (7) consists of aluminium or an aluminium alloy.

3. A coupling according to Claim 1, **characterised in that** the annular, rigid solid body (7) is surrounded completely by a layer of silicone material.

## Revendications

1. Accouplement (1) symétrique en rotation avec un moyeu annulaire (2) qui est réalisé en un matériau sensiblement rigide et qui est entouré par un anneau extérieur (3) en matériau ayant l'élasticité d'un caoutchouc, et avec un contour extérieur (5) disposé au diamètre extérieur (4), par lequel des couples de rotation sont transférés par concordance de forme, où est noyé dans l'anneau extérieur (3) à proximité des contours extérieurs (5) un corps solide rigide (7) sensiblement annulaire dans le matériau ayant l'élasticité d'un caoutchouc de l'anneau extérieur (3), qui présente également un contour extérieur (7a), où des formations individuelles (7b) du contour extérieur (7a) du corps solide rigide annulaire (7) font saillie dans des formations individuelles du contour extérieur (5) de l'anneau extérieur (3) radialement de l'intérieur vers l'extérieur, et le corps solide annulaire rigide (7) ressemble par sa forme dirigée radialement vers l'extérieur au contour extérieur (5) de l'anneau extérieur (3) et présente sur le pourtour un écart presque constant au contour extérieur (5) de l'anneau extérieur (3),
**caractérisé en ce que** le matériau ayant une élasticité de caoutchouc est du silicone et **en ce que** le corps solide annulaire rigide (7) est réalisé en un matériau de bande métallique courbé d'une épaisseur constante et présente des creux semi-circulaires.

2. Accouplement selon la revendication 1, **caractérisé en ce que** le corps rigide annulaire solide (7) est réalisé en aluminium ou en un alliage d'aluminium.

3. Accouplement selon la revendication 1, **caractérisé en ce que** le corps solide annulaire rigide (7) est entouré complètement par une couche en matériau de silicone.
